# EUROPEAN PATENT APPLICATION

(11) **EP 4 685 897 A2**
(43) Date of publication of application: **28.01.2026**
(21) Application number: 25189850.8
(22) Date of filing: 16.07.2025
(51) Int. Cl.: H01M 10/04, H01M 50/105

(54) **BATTERY CELL, MANUFACTURING METHOD OF BATTERY CELL, AND BATTERY MODULE**

(30) Priority: 22.07.2024 KR 20240096626
(71) Applicant: SK On Co., Ltd., Seoul 03161 (KR)
(72) Inventor: KIM, Dong Jin, 34124 Daejeon (KR); LEE, Sang Bin, 34124 Daejeon (KR)
(74) Representative: Prüfer & Partner mbB Patentanwälte · Rechtsanwälte

(57) **Abstract**

The present disclosure provides a battery cell of the present disclosure including: an electrode assembly including a plurality of electrode plates and a plurality of separators; a pouch including a body portion accommodating the electrode assembly and a sealing portion sealing at least a portion of a circumference of the body portion; an electrode lead electrically connected to the electrode assembly; and a pressure compensation member disposed between the electrode assembly and the body portion, and the electrode assembly includes a uniform thickness region including a center of the electrode assembly, and a low thickness region disposed closer to the electrode lead than to the uniform thickness region, and the pressure compensation member is disposed between the low thickness region and an inner surface of the body portion in a thickness direction of the electrode assembly.

## Description

### TECHNICAL FIELD

The present disclosure relates to a battery cell, a manufacturing method of battery cell, and a battery module.

### BACKGROUND

As technological development and demand for mobile devices, electric vehicles, and energy storage devices increase, demand for secondary battery cells as an energy source rapidly increases. A secondary battery cell is a battery that may repeat charging and discharging because the mutual conversion between chemical energy and electrical energy is reversible.

A battery cell may include an electrode assembly comprised of a cathode plate, an anode plate, a separator, and the like, and an electrolyte. The battery cell may be configured as a pouch-type battery cell or a square or cylindrical can-type battery cell.

A plurality of battery cells may be disposed in a certain pattern to form a battery module or a battery pack, and may be used for various purposes such as electric vehicles and energy storage systems (ESS).

### SUMMARY

As charging and discharging of the secondary battery cell proceeds, a swelling phenomenon in which a volume of the battery cell expands may occur. The swelling phenomenon may occur due to solid expansion caused by charging and discharging or gas generation in high-temperature environments. When the swelling phenomenon occurs, the battery cell swells and the lifespan of the battery cell and battery module may be reduced due to surface pressure imbalance between battery cells within the battery module.

In order to deal with the swelling phenomenon, compressible members such as pads may be disposed around the battery cells to alleviate the surface pressure imbalance between the battery cells.

However, if there is a thickness deviation in the electrode assembly depending on the position of the electrode plate included in an electrode assembly, there is a limit to resolving the surface pressure imbalance using compressible pads. When the surface pressure imbalance occurs in the battery cell, a sudden drop in the battery cell capacity or a rapid increase in resistance may occur in a portion in which the surface pressure is low.

According to an aspect of the present disclosure, a battery cell which may increase a lifespan by reducing a surface pressure imbalance applied to a battery cell, a manufacturing method of a battery cell, and a battery module may be provided.

According to an aspect of the present disclosure, a battery cell which may limit a rapid decrease in a capacity of a battery cell or a rapid increase in resistance due to a surface pressure imbalance, a manufacturing method of a battery cell, and a battery module may be provided.

A battery module of the present disclosure and a battery pack including the same may be widely applied to electric vehicles, battery charging stations, and devices in green technology fields such as solar power generation and wind power generation using other batteries. Additionally, the battery module of the present disclosure and the battery pack including the same may be used in eco-friendly electric vehicles, hybrid vehicles, and the like, to ameliorate the effects of climate change by suppressing air pollution and greenhouse gas emissions.

A battery cell according to the present disclosure may include: an electrode assembly including a plurality of electrode plates and a plurality of separators; a pouch including a body portion accommodating the electrode assembly and a sealing portion sealing at least a portion of a circumference of the body portion; an electrode lead electrically connected to the electrode assembly; and a pressure compensation member disposed between the electrode assembly and the body portion, and the electrode assembly may include a uniform thickness region including a center of the electrode assembly, and a low thickness region disposed closer to the electrode lead than to the uniform thickness region, and the pressure compensation member may be disposed between the low thickness region and an inner surface of the body portion in a thickness direction of the electrode assembly.

In an example embodiment, the uniform thickness region and the low thickness region may be formed in a region on which a slurry is coated.

In an example embodiment, the electrode assembly may include an electrode tab connecting the plurality of electrode plates and the electrode leads, and the low thickness region may be disposed between the electrode tab and the uniform thickness region.

In an example embodiment, when a difference between an average thickness of the electrode assembly in the uniform thickness region and a thickness of the electrode assembly in the low thickness region is referred to as a thickness deviation, a maximum thickness of the pressure compensation member may have a value less than or equal to a maximum value of the thickness deviation.

In an example embodiment, a thickness of the pressure compensation member may be a value measured in an uncompressed state when the pressure compensation member is formed of an incompressible material, and the thickness of the pressure compensation member may be a value measured in a state in which the pressure compensation member is compressed by a preset value when the pressure compensation member is formed of a compressible material.

In an example embodiment, the pressure compensation member may be formed of an electrically insulating material.

In an example embodiment, the pressure compensation member may be respectively disposed on both outer surfaces of the low thickness region based on a thickness direction of the electrode assembly.

In an example embodiment, in the pressure compensation member, a thickness of a portion adjacent to the electrode lead in a first direction in which the electrode lead extends from the electrode assembly may have a greater value than a thickness of a portion distant from the electrode lead.

In an example embodiment, the pressure compensation member may have a shape in which a thickness thereof decreases in a direction away from the portion adjacent to the electrode lead.

In another example embodiment, the pressure compensation member has a stepped cross-sectional shape.

A height of the pressure compensation member may have a value greater than or equal to the height of the electrode plate.

In another example embodiment, the pressure compensation member may include: a first pressurizing portion disposed between the low thickness region and an inner surface of the body portion in a first direction in which the electrode lead extends from the electrode assembly, and a second pressurizing portion disposed along an edge of the electrode assembly in which the electrode lead is not disposed, among edges of the electrode assembly, on a plane, perpendicular to a thickness direction of the electrode assembly.

In an example embodiment, the electrode leads may have a shape in which the electrode leads respectively extend from both sides of the electrode assembly, the low thickness regions may be respectively disposed on both sides of the electrode assembly, and the pressure compensation members may be disposed in each of the low thickness regions.

In an example embodiment, the electrode lead may have a shape extending from one side of the electrode assembly, the low thickness region may be disposed on one side of the electrode assembly, and the pressure compensation member may be disposed in the low thickness region disposed on one side of the electrode assembly.

A manufacturing method of a battery cell of the present disclosure may include: a pressure compensation member disposing operation of disposing a pressure compensation member in a body portion of a pouch; an electrode assembly disposing operation of disposing an electrode assembly to which an electrode lead is connected in an accommodation space formed in the body portion; and a sealing operation of sealing at least a portion of a circumference of the body portion, and the electrode assembly may include a uniform thickness region including a center of the electrode assembly, and a low thickness region disposed closer to the electrode lead than to the uniform thickness region, and the pressure compensation member may be disposed in a portion of the body portion facing the low thickness region.

In an example embodiment, the pressure compensation member disposing operation may include: a process of disposing the pressure compensation member in the pouch; and a process of forming the accommodation space in the pouch in a state in which the pressure compensation member is disposed.

In an example embodiment, the pressure compensation member disposing operation may include: a process of forming the accommodation space in the pouch; and a process of disposing the pressure compensation member in the accommodation space.

A battery module according to the present disclosure may include: a cell assembly including a plurality of battery cells; and a busbar assembly including a busbar electrically connected to the plurality of battery cells, and at least one of the plurality of battery cells may include: an electrode assembly including a plurality of electrode plates and a plurality of separators; a pouch including a body portion accommodating the electrode assembly and a sealing portion sealing at least a portion of a circumference of the body portion; an electrode lead electrically connected to the electrode assembly; and a pressure compensation member disposed between the electrode assembly and the body portion, and the electrode assembly includes a uniform thickness region including a center of the electrode assembly, and a low thickness region disposed closer to the electrode lead than to the uniform thickness region, and the pressure compensation member is disposed between the low thickness region and an inner surface of the body portion in a thickness direction of the electrode assembly.

According to an example embodiment of the present disclosure, the lifespan of a battery cell and/or a battery module may be increased.

According to an example embodiment of the present disclosure, it may be possible to improve the problem of a rapid degradation in the capacity of a battery cell or a rapid increase in resistance.

### BRIEF DESCRIPTION OF DRAWINGS

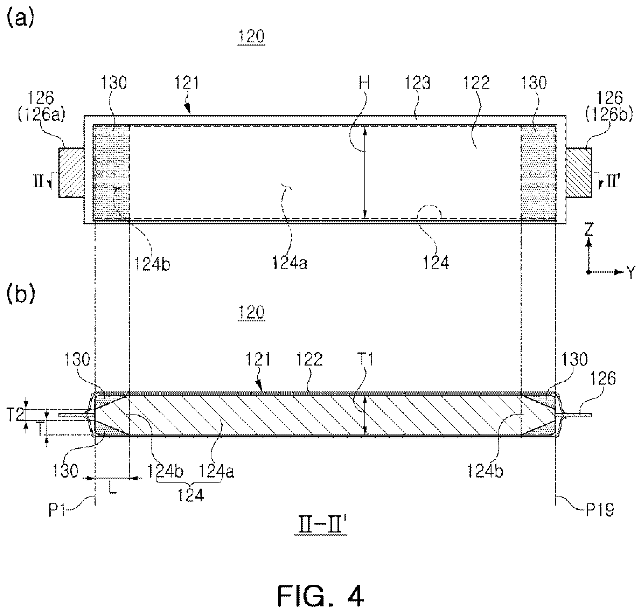

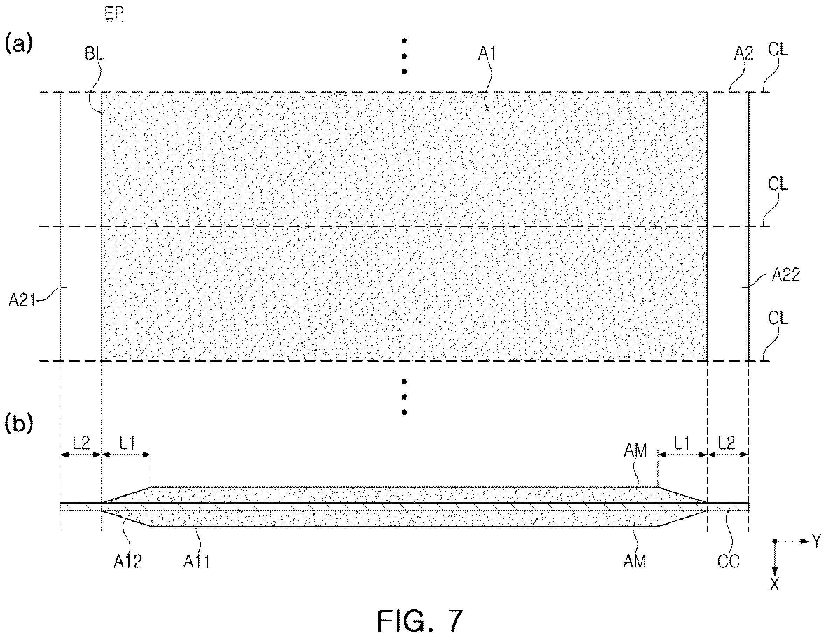

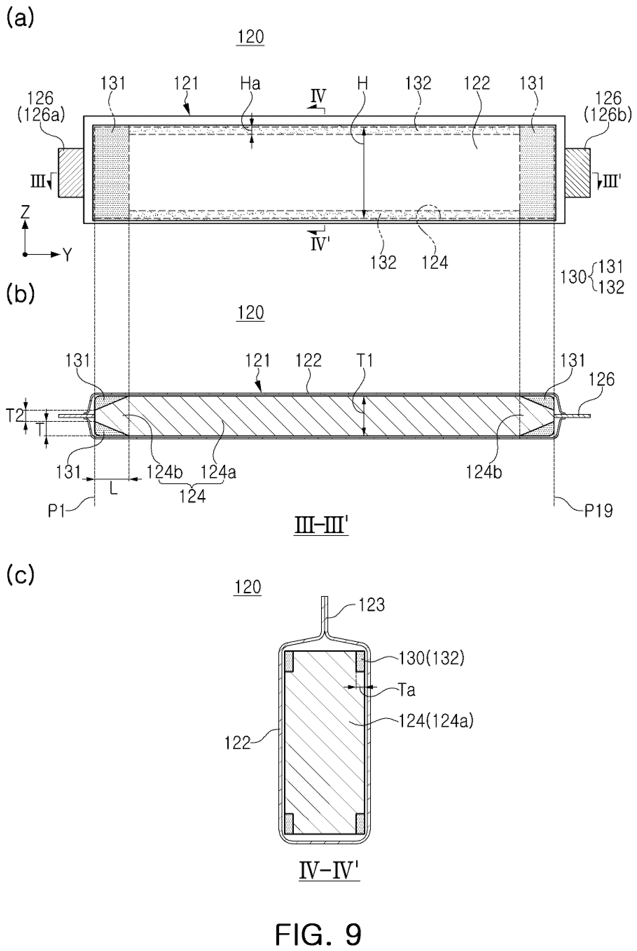

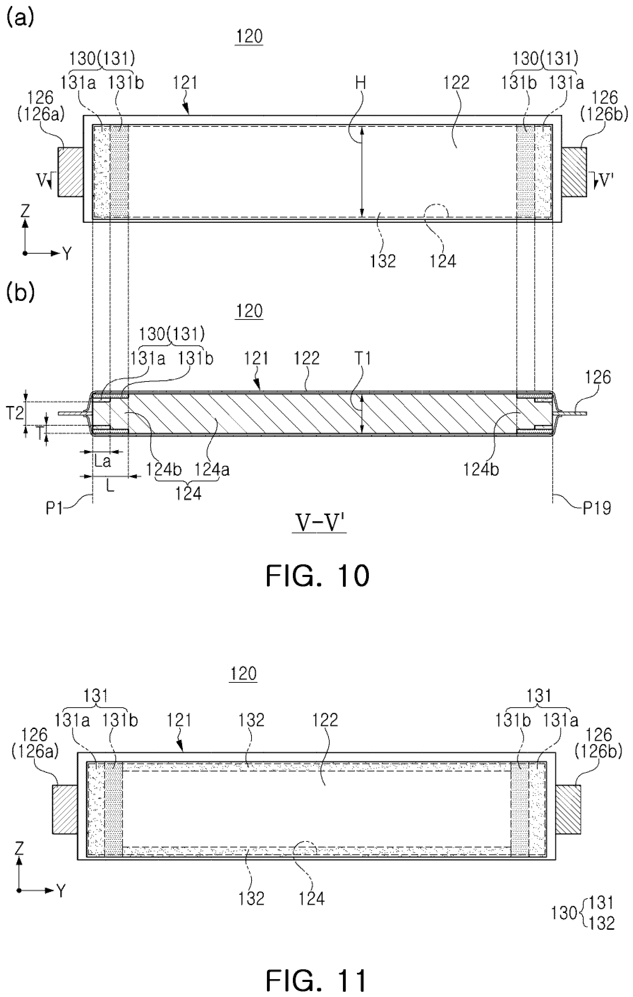

Certain aspects, features, and advantages of the present disclosure are illustrated by the following detailed description with reference to the accompanying drawings.
FIG. 1 is a perspective view of a battery cell according to an example embodiment;
FIG. 2 is an exploded perspective view of a battery cell according to an example embodiment, illustrating a state in which an electrode assembly is assembled on a pouch;
FIG. 3 is a cross-sectional view taken along line I-I' of FIG. 1;
The (a) and (b) portions of FIG. 4 schematically illustrate an internal structure of a battery cell, and the (a) portion of FIG. 4 illustrates an installation position of a pressure compensation member in front of the battery cell, and the (b) portion of FIG. 4 schematically illustrates a cross-section taken along line II-II' of the (a) portion of FIG. 4;

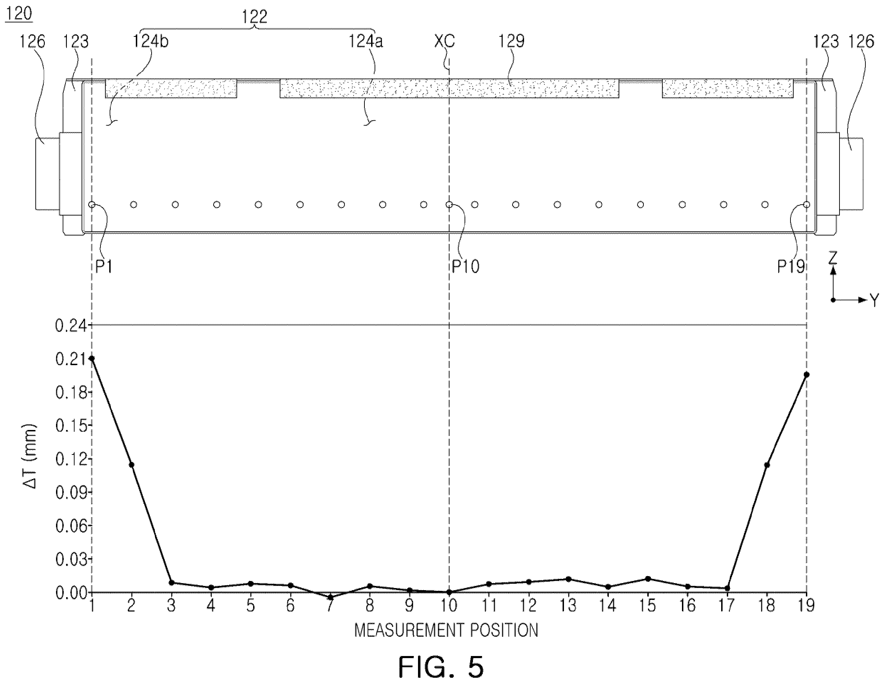

FIG. 5 is a graph illustrating a thickness variation of an electrode assembly in a battery cell according to an example embodiment;

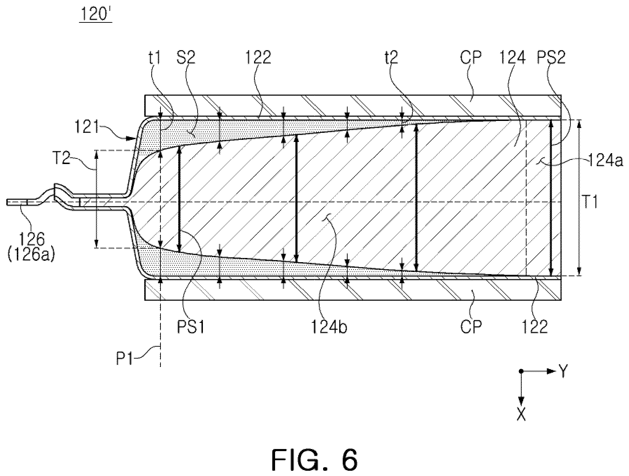

FIG. 6 is a view schematically illustrating a thickness change of an electrode assembly in a portion adjacent to an electrode lead with respect to the battery cell according to Comparative Example;
The (a) and (b) portions of FIG. 7 illustrate an electrode plate, and the (a) portion of FIG. 7 is a plan view of the electrode plate, and the (b) portion of FIG. 7 is a cross-sectional view of the electrode plate;

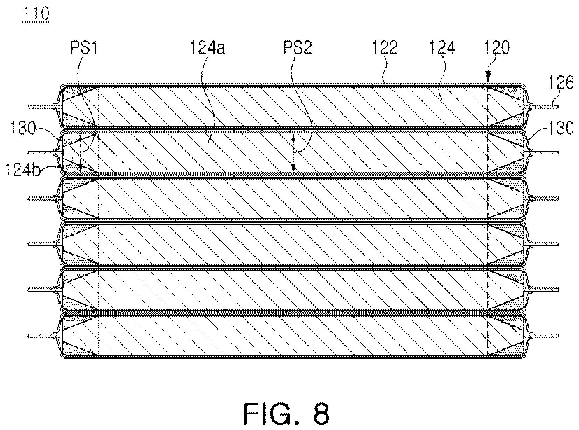

FIG. 8 is a cross-sectional view illustrating a cell assembly according to an example embodiment;
   The (a) to (c) portions of FIG. 9 schematically illustrate an internal structure of a battery cell according to another example embodiment, and the (a) portion of FIG. 9 illustrates an installation position of a pressure compensation member on a front surface of the battery cell, the (b) portion of FIG. 9 schematically illustrates a cross-section taken along line III-III' of the (a) portion of FIG. 9, and the (c) portion of FIG. 9 schematically illustrates a cross-section taken along line IV-IV' of the (a) portion of FIG. 9;
The (a) and (b) portions of FIG. 10 schematically illustrate an internal structure of a battery cell according to another example embodiment, and the (a) portion of FIG. 10 illustrates an installation position of a pressure compensation member in front of the battery cell, and the (b) portion of FIG. 10 schematically illustrates a cross-section taken along line V-V' of the (a) portion of FIG. 10
FIG. 11 is a schematic diagram illustrating an installation position of a pressure compensating member on a front surface of a battery cell according to another example embodiment;

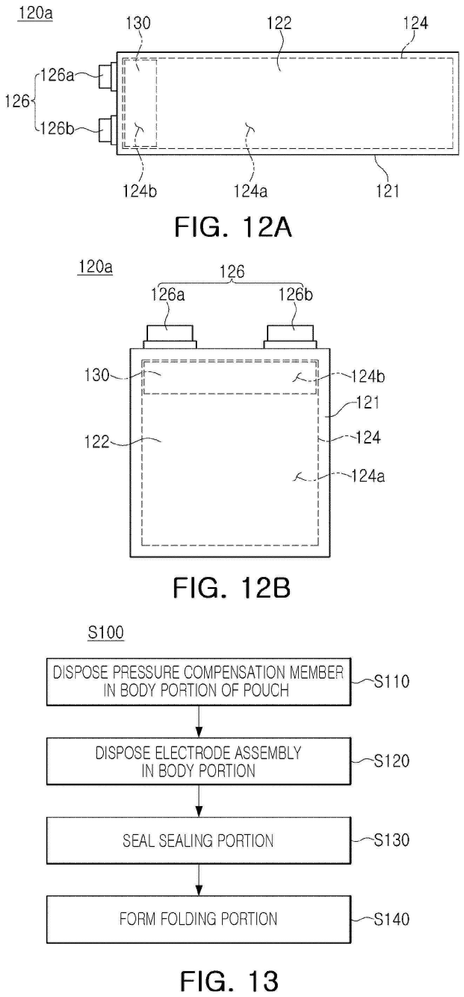

FIGS. 12A and 12B are schematic diagrams of a battery cell according to another example embodiment;
FIG. 13 is a flowchart illustrating a manufacturing method of a battery cell according to an example embodiment;

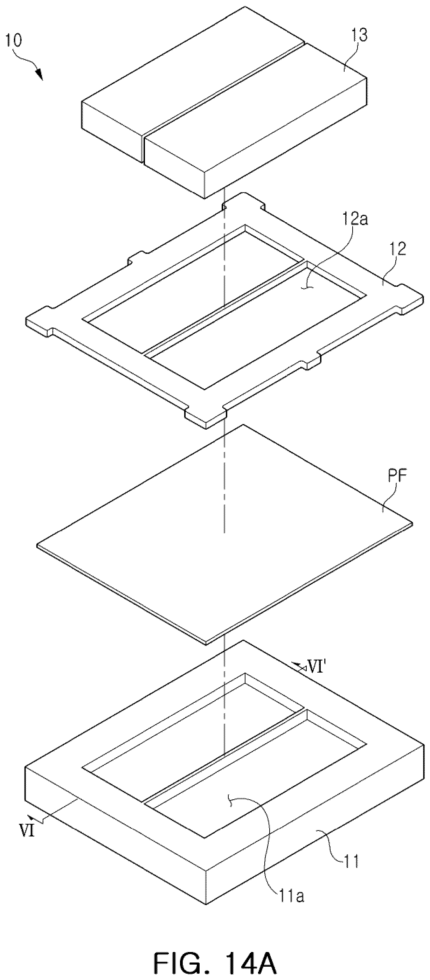

FIGS. 14A to 14E are schematic diagrams sequentially illustrating a manufacturing method of a battery cell according to an example embodiment;

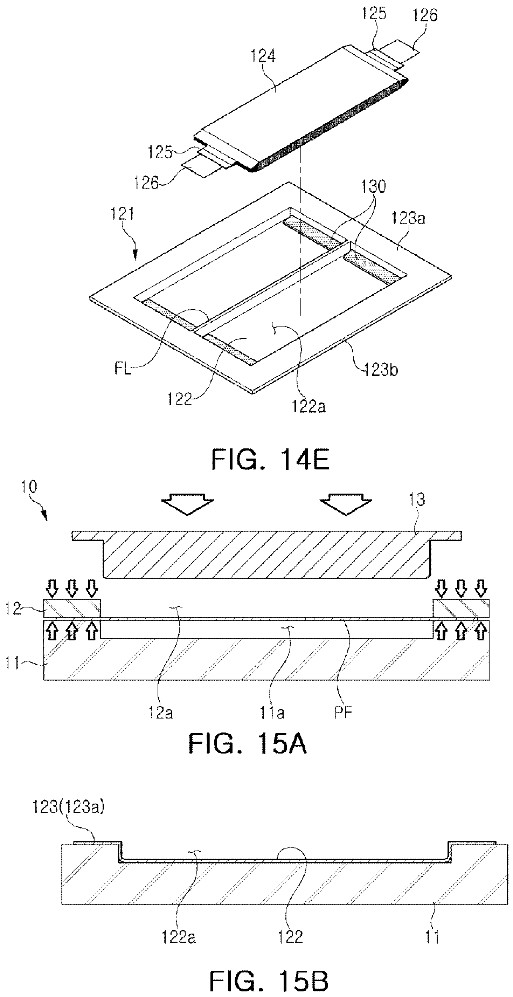

FIGS. 15A to 15C are schematic diagrams sequentially illustrating a manufacturing method of a battery cell according to another example embodiment;

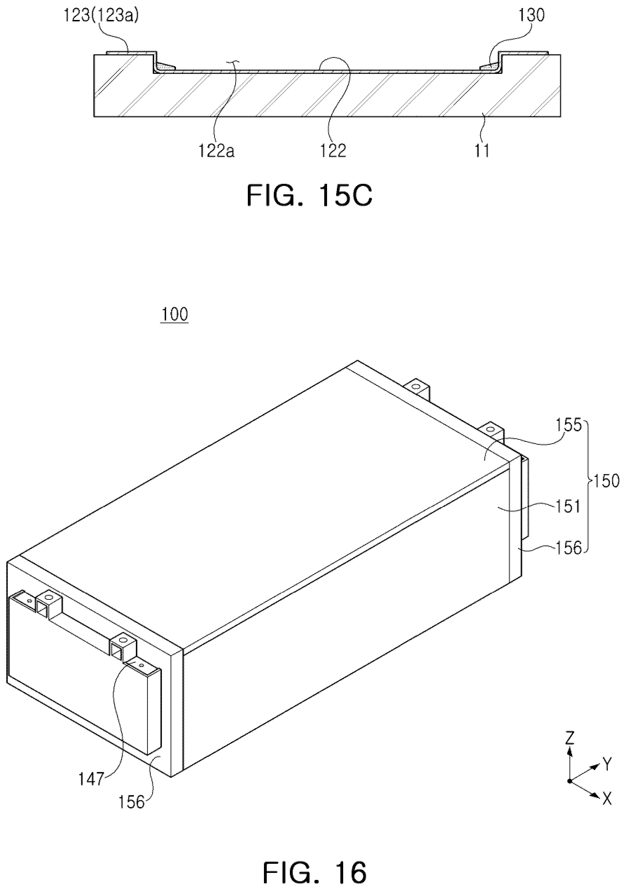

FIG. 16 is a perspective view of a battery module according to an example embodiment;

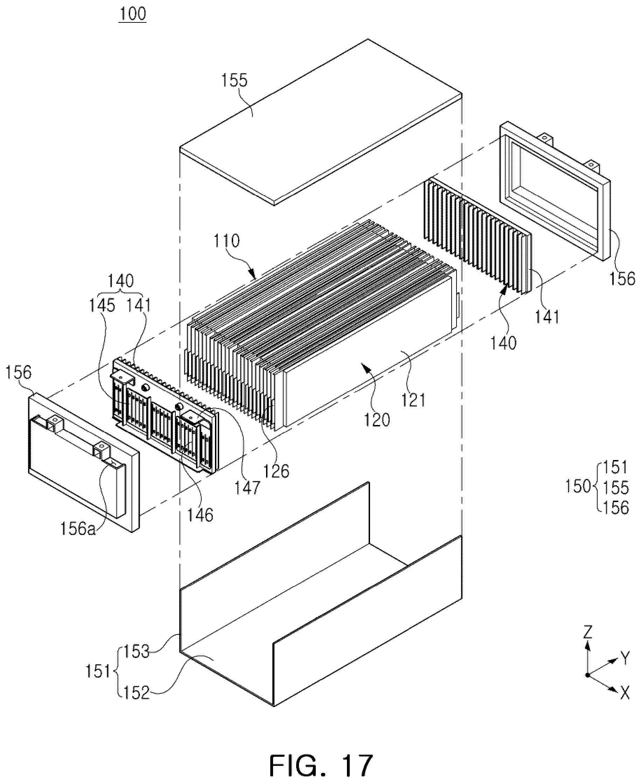

FIG. 17 is an exploded perspective view of the battery module illustrated in FIG. 16; and

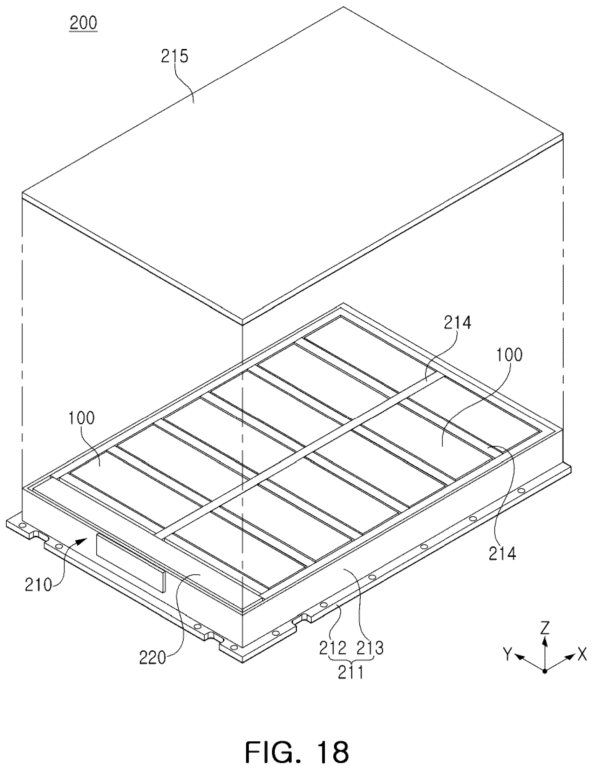

FIG. 18 is an exploded perspective view of a battery pack according to an example embodiment.

### DETAILED DESCRIPTION

The same reference numeral or symbol written in each accompanying drawing of the specification refers to parts or components that perform substantially the same function. The present inventive concept is described using the same reference numeral or symbol even in different exemplary embodiments for easy description and appreciation. In this aspect, although all components having the same reference numeral are illustrated in a plurality of drawings, the plurality of drawings do not necessarily refer to a single exemplary embodiment.

In this specification, the singular also includes the plural unless specifically stated otherwise in the phrase. It will be further understood that the terms "comprises," "comprising," "includes" and/or "including," when used herein, specify the presence of stated features, integers, steps, operations, elements, components and/or combinations thereof, but do not preclude the presence or addition of one or more other features, integers, steps, operations, elements, components, and/or groups thereof.

Additionally, it should be noted in advance that the expressions such as "above," "upper," "below," "beneath," "lower," "side," "front," and "rear" are based on the direction illustrated in the drawings, and may be expressed differently if the direction of the object is changed.

Additionally, in the present specification and claims, terms including ordinal numbers such as "first" and "second" may be used to distinguish between components. These ordinal numbers are used to distinguish the same or similar components from each other, and the meaning of the terms should not be construed as being limited by the use of these ordinal numbers. For example, the components combined with these ordinal numbers should not be construed as limiting the order of use or arrangement of the components. If necessary, the ordinal numbers may be used interchangeably.

Hereinafter, with reference to the drawings, specific embodiments of the present disclosure will be described. However, these are merely exemplary and the present disclosure is not limited to the specific example embodiments described by way of example.

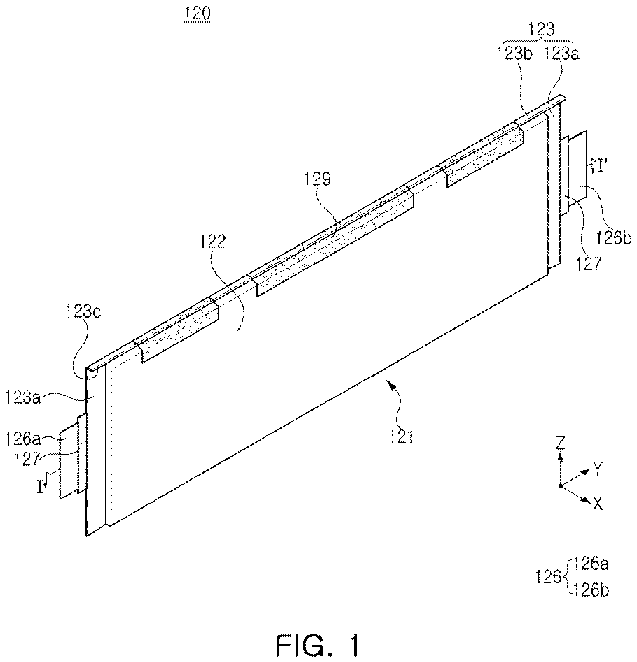

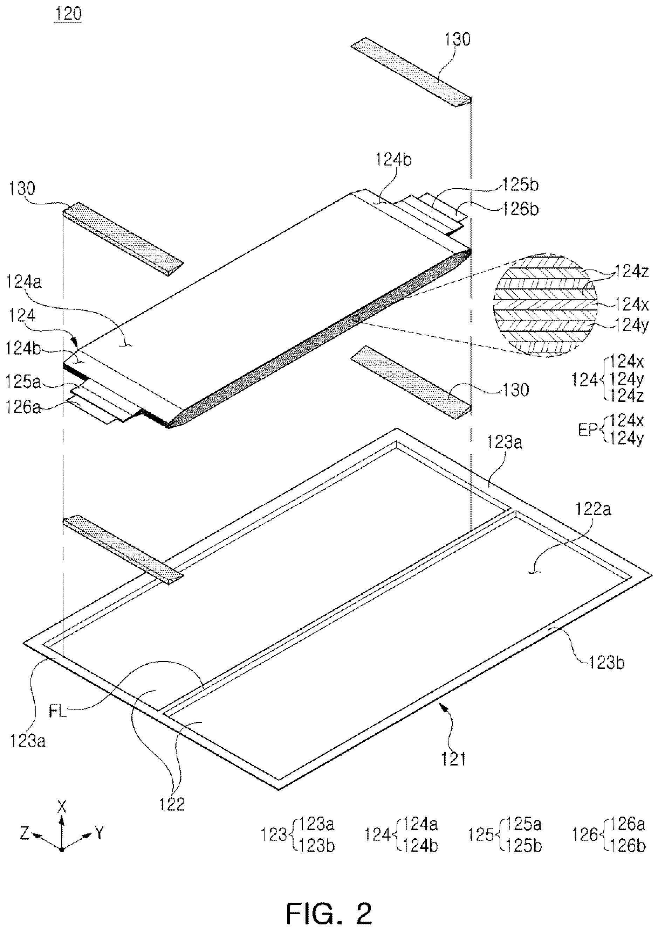

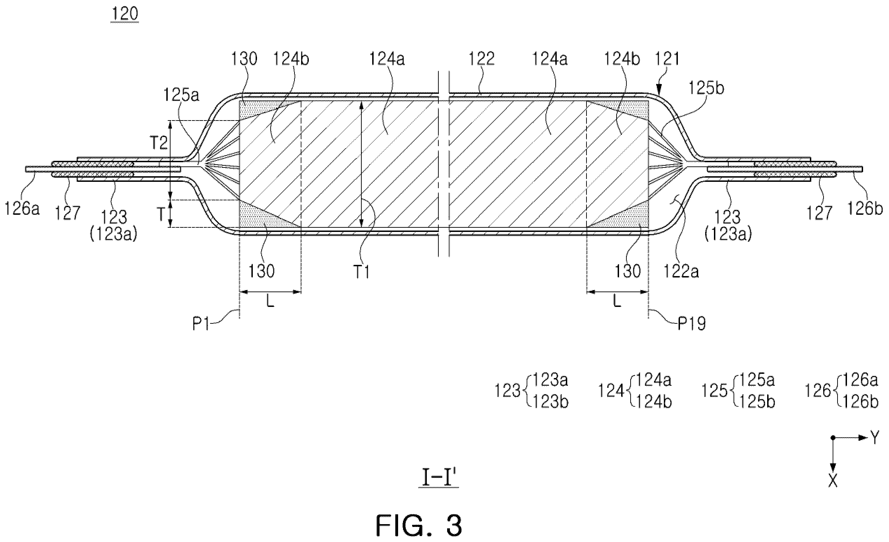

FIG. 1 is a perspective view of a battery cell 120 according to an example embodiment. FIG. 2 is an exploded perspective view of a battery cell 120 according to an example embodiment, and illustrates a state in which an electrode assembly 124 is assembled into a pouch 121. FIG. 3 is a cross-sectional view along line I-I' of FIG. 1. The (a) and (b) portions of FIG. 4 schematically illustrate an internal structure of a battery cell 120, and the (a) portion of FIG. 4 illustrates an installation position of a pressure compensation member 130 in front of a battery cell 120, and the (b) portion of FIG. 4 schematically illustrates a cross-section taken along line II-II' of the (a) portion of FIG. 4.

A battery cell 120 according to an example embodiment may include an electrode assembly 124 including a plurality of electrode plates EP and a plurality of separators 124z, a pouch 121 including a body portion 122 accommodating the electrode assembly 124 and a sealing portion 123 sealing at least a portion of a circumference of the body portion 122, an electrode lead 126 electrically connected to the electrode assembly 124, and a pressure compensation member 130 disposed between the electrode assembly 124 and the body portion 122. The electrode assembly 124 may include a uniform thickness region 124a including a center of the electrode assembly 124 and a low thickness region 124b disposed closer to the electrode lead 126 than the uniform thickness region 124a. The pressure compensation member 130 may be disposed between the low thickness region 124b and an inner surface of the body portion 122 in a thickness direction of the electrode assembly 124.

In the battery cell 120 of the present disclosure, a width direction (length direction) refers to a first direction (Y-direction) in which the electrode lead 126 extends from the electrode assembly 124, a thickness direction refers to a second direction (X-direction), perpendicular to a wide surface of the pouch 121, and a height direction (up-down direction or gravity direction) refers to a third direction (Z-direction,) perpendicular to the width direction and the thickness direction.

The electrode assembly 124 may include a plurality of electrode plates EP and a plurality of separators 124z and may be accommodated in an accommodation space 122a of the body portion 122. The electrode plates EP may include a cathode plate 124x and an anode plate 124y. The electrode assembly 124 may have a shape in which the cathode plate 124x and the anode plate 124y are stacked with the separator 124z interposed therebetween, in a state in which wide surfaces of the cathode plate 124x and the anode plate 124y face each other. Each of the plurality of cathode plates 124x and the plurality of anode plates 124y may include an electrode tab 125. The electrode tab 125 may include a cathode tab 125a disposed on the cathode plate 124x and an anode tab 125b disposed on the anode plate 124y. The electrode tab 125 may be connected to the electrode lead 126 so that the same polarities are in contact with each other.

The electrode assembly 124 may include a uniform thickness region 124a having a uniform thickness and a low thickness region 124b having a relatively smaller thickness than the uniform thickness region 124a in a region in which a slurry AM (including an active material, a conductive material, and a binder) (see FIG. 7) is applied. That is, the uniform thickness region 124a and the low thickness region 124b may be formed in the region on which the slurry is coated. The uniform thickness region 124a may include the center of the electrode assembly 124, and the low thickness region 124b may be disposed closer to the electrode lead 126 than the uniform thickness region 124a.

The electrode assembly 124 may include a plurality of electrode plates EP and an electrode tab 125 connecting the electrode lead 126, and the low thickness region 124b may be disposed between the electrode tabs 125 and the uniform thickness region 124a.

Here, 'uniform thickness' is not limited to the thickness being completely the same, but means that the thickness of the electrode assembly 124 is included within a certain range (for example, within 3%).

The low thickness region 124b means a region in which the thickness of the electrode assembly 124 is overall smaller than the uniform thickness region 124a. For example, the low thickness region 124b may include a region in which the thickness of the electrode assembly 124 is outside a certain range (for example, within 3%) and has a thickness smaller than the uniform thickness region 124a. Here, the certain range is not fixed to a specific value, and may be changed according to a thickness deviation of the current collector (metal foil) forming the electrode plate EP, a thickness deviation of the slurry including the active material. The low thickness region 124b may be a region in which the electrode assembly 124 has a thin thickness in a state in which pressure is applied to the electrode assembly 124.

The uniform thickness region 124a and the low thickness region 124b may be determined according to the thickness of the electrode assembly 124. The uniform thickness region 124a and the low thickness region 124b may be set based on a region on which a slurry (including the active material) is coated or a region in which the electrode plates EP [cathode plate 124x and anode plate 124y] are stacked, and the electrode tab 125 may not be included in the low thickness region 124b. The uniform thickness region 124a and the low thickness region 124b may have an overall rectangular shape when viewed from the second direction (X-direction).

The low thickness region 124b may extend inwardly from an end position P1 of the first electrode plate EP (e.g., the cathode plate 124x) on one side of the electrode assembly 124, and may extend inwardly from an end position P19 of the second electrode plate EP (e.g., the anode plate 124y) on the other side of the electrode assembly 124.

The pouch 121 may be formed in a container shape to provide the accommodation space 122a in which the electrode assembly 124 and the electrolyte are accommodated. For example, the pouch 121 may be formed of an outer sheet PF (see FIG. 14A) in which a resin such as polypropylene and aluminum are laminated. However, the material included in the pouch 121 may be variously changed.

The pouch 121 may include the body portion 122 and the sealing portion 123. The body portion 122 may be formed in a container shape to provide the accommodation space 122a having a certain shape (for example, a hexahedron) in which the electrode assembly 124 and an electrolyte are accommodated.

The sealing portion 123 may extend from at least a portion of the circumference of the body portion 122. The sealing portion 123 may be formed in a flange shape expanded outwardly from at least a portion of the circumference of the body portion 122. For example, when a single outer sheet (pouch film) is folded based on a reference line FL to form the pouch 121, the sealing portion 123 may have a shape extending from three surfaces of the four surfaces of the body portion 122. In contrast, when two outer sheets are overlapped to form a pouch 121, the sealing portion 123 may have a shape extending from all four surfaces of the body portion 122. The sealing portion 123 may have a state in which the outer sheets forming the pouch 121 are covered with each other or overlap each other. The sealing portion 123 may include a portion in which the outer sheets covered with each other are bonded to seal the body portion 122. A heat-melting method may be used for bonding the sealing portion 123, but the present disclosure is not limited thereto.

The electrode lead 126 may be exposed externally through a portion of the sealing portion 123. For example, the electrode lead 126 may have a shape extending in the first direction (Y-direction) from the electrode assembly 124 and may be exposed externally of the sealing portion 123. The electrode lead 126 may include a cathode lead 126a connected to the cathode tab 125a of the cathode plate 124x and an anode lead 126b connected to the anode tab 125b of the anode plate 124y.

In an example embodiment, the sealing portion 123 may be divided into a first sealing portion 123a disposed on a flange in which the electrode lead 126 is disposed, and a second sealing portion 123b disposed on a flange in which the electrode lead 126 is not disposed. In the first sealing portion 123a, the electrode lead 126 may be covered with an insulating portion 127. The insulating portion 127 may increase electrical insulation performance between the electrode lead 126 and the pouch 121 and may increase a sealing degree of a sealing region. The insulating portion 127 may include an insulating film.

According to an example embodiment, in the battery cell 120, the electrode leads 126 may be respectively disposed on both sides of the body portion 122 based on the first direction (Y-direction) of the battery cell 120. For example, the cathode lead 126a and the anode lead 126b may be disposed to face in opposite directions. However, the cathode lead 126a and the anode lead 126b may also be disposed to face in the same direction on one side of the body portion 122 and to be spaced apart from each other (see FIGS. 12A and 12B).

In an example embodiment, in order to increase the bonding reliability of the sealing portion 123 and reduce a region occupied by the sealing portion 123, the battery cell 120 may be formed in a form in which some of the sealing portions 123 are folded at least once. For example, the second sealing portion 123b in which the electrode lead 126 is not disposed may include a folding portion 123c folded based on the first direction (Y-direction) of the battery cell 120. The folding portion 123c may have a folded shape by at least one folding process. In an example embodiment, the battery cell 120 may include at least one tape 129 covering the folding portion 123c to limit unfolding of the folding portion 123c due to an increase in the internal pressure of the battery cell 120. The tape 129 may have a shape wrapping around the folding portion 123c.

The pressure compensation member 130 may be disposed between the low thickness region 124b and the inner surface of the body portion 122 in the thickness direction (X-direction) of the electrode assembly 124. The pressure compensation member 130 may be disposed in a thin low thickness region 124b of the electrode assembly 124 to increase surface pressure or pressing force applied to the electrode assembly 124 in the low thickness region 124b.

The electrode leads 126 may have a shape in which the electrode leads 126 respectively extend from both sides of the electrode assembly 124, and the low thickness regions 124b may be respectively disposed on both sides of the electrode assembly 124, and the pressure compensation member 130 may be disposed in each of the low thickness regions 124b.

In the first direction (Y-direction) in which the electrode leads 126 extend from the electrode assembly 124, the electrode assembly 124 may include low thickness regions 124b on each of both sides of the first direction (Y-direction). The pressure compensation members 130 may be disposed on both outer surfaces of the low thickness region 124b based on the thickness direction of the electrode assembly 124. For example, the pressure compensation members 130 may be disposed on both outer surfaces of the low thickness region 124b disposed on a first side in the first direction (Y-direction), and may be disposed on both outer surfaces of the low thickness region 124b disposed on the other side (second side) in the first direction (Y-direction). That is, when the electrode leads 126 are disposed on the first side and the other side (second side) of the electrode assembly 124 in the first direction (Y-direction), a total of four pressure compensation members 130 may be disposed, two each in a portion adjacent to each electrode lead 126. However, the installation position and number of the pressure compensation members 130 are not limited thereto. For example, the pressure compensation member 130 may be disposed only on one of the first side and the other side of the first direction (Y-direction) (for example, see FIGS. 12A and 12B), and may be disposed only on one of both outer surfaces of the low thickness region 124b.

The pressure compensation member 130 may have a shape covering at least a portion of the low thickness region 124b and not covering at least a portion of the uniform thickness region 124a. That is, the pressure compensation member 130 may have a shape not covering the entire uniform thickness region 124a in the first direction (Y-direction) in which the electrode lead 126 extends. For example, the pressure compensation member 130 may be disposed in a position deviating from at least a portion of the uniform thickness region 124a, and may be configured to cover at least a portion of the low thickness region 124b.

A width L of the pressure compensation member 130 in the first direction (Y-direction) may be set according to a length of the low thickness region 124b in the first direction (Y-direction). In the first direction (Y-direction) in which the electrode lead 126 extends from the electrode assembly 124, the width L of the pressure compensation member 130 may have a value of 0.5 to 2.0 times a width of the low thickness region 124b. The width L of the pressure compensation member 130 may have a value of 0.7 to 1.5 times, 0.8 to 1.2 times, or 0.8 to 1.0 times the width of the low thickness region 124b. That is, the pressure compensation member 130 may cover at least half of the low thickness region 124b in order to compensate for the thickness of the low thickness region 124b and increase the surface pressure. Additionally, the pressure compensation member 130 may cover most or all of the low thickness region 124b. When the width L of the pressure compensation member 130 is significantly small (for example, less than 0.5 times the width of the low thickness region 124b), the pressure compensation member 130 does not sufficiently cover the low thickness region 124b, so that the effect of thickness compensation and surface pressure increase of the low thickness region 124b is reduced. Conversely, when the width L of the pressure compensation member 130 is significantly large (for example, more than 2.0 times the width of the low thickness region 124b), the pressure compensation member 130 may cover a large area of the uniform thickness region 124a, so that the thickness of the battery cell 120 increases and the effect of thickness compensation of the low thickness region 124b may be reduced.

A height H of the pressure compensation member 130 may have a value greater than or equal to a height of the electrode plate EP provided in the electrode assembly 124. For example, the height H of the pressure compensation member 130 may have a value greater than or equal to a height of the cathode plate 124x. The pressure compensation member 130 may entirely cover the electrode assembly 124 in the height direction (Z-direction) of the battery cell 120 in the low thickness region 124b. As an example, the height H of the pressure compensation member 130 may have a value corresponding to a height of the low thickness region 124b or a height of the body portion 122. The height H of the pressure compensation member 130 may have a value smaller than the height of the body portion 122. However, it may also be possible to set a height of the pressure compensation member 130 to be at least half of the height of the electrode plate EP provided in the electrode assembly 124.

In the case in which the pressure compensation member 130 is installed over the entire first direction (Y-direction) in which the electrode lead 126 extends from the body portion 122, since the pressure compensation member 130 is installed in a portion in which pressure compensation and/or thickness compensation is not required (for example, a central portion of the uniform thickness region 124a), there may be a problem in that the space efficiency of the battery cell 120 and the battery module including the same is reduced. Additionally, when the pressure compensation member 130 is installed over a wide region of the uniform thickness region 124a in which thickness compensation is not required as well as the low thickness region 124b in which the thickness compensation is required, the thickness compensation effect of the pressure compensation member 130 may be reduced in the low thickness region 124b. On the other hand, according to an example embodiment, since the pressure compensation member 130 is mainly installed in the low thickness region 124b in which the thickness compensation is required, not only may the thickness compensation effect of the pressure compensation member 130 be sufficiently achieved in the low thickness region 124b, but also the problem of reducing the space efficiency of the battery cell 120 and the battery module 100 (see FIG. 16) including the same due to the installation of the pressure compensation member 130 may be solved.

The pressure compensation member 130 may compensate for a reduced thickness in the low thickness region 124b as compared to a thickness T1 of the uniform thickness region 124a. Since a thickness T2 of the low thickness region 124b has a smaller value than the thickness T1 of the uniform thickness region 124a, when swelling occurs in the battery cell 120, a difference in a space in which the electrode assembly 124 may swell may occur in the uniform thickness region 124a and the low thickness region 124b. Accordingly, surface pressure or pressing force applied to the low thickness region 124b by the adjacent battery cell 120, and the like, may have a smaller value than the surface pressure or the pressing force applied to the uniform thickness region 124a. The pressure compensation member 130 may compensate for the reduced thickness in the low thickness region 124b to have the surface pressure or the pressing force applied to the low thickness region 124b similar to the surface pressure or the pressing force applied to the uniform thickness region 124a.

A thickness T of the pressure compensation member 130 may have a value smaller than that of a difference between the thickness T1 of the uniform thickness region 124a and the thickness T2 of the low thickness region 124b. The thickness T1 of the uniform thickness region 124a may be defined as an average thickness. As an example, when the difference between the thickness T1 of the uniform thickness region 124a and the thickness T2 of the low thickness region 124b is referred to as a thickness deviation (ΔT in FIG. 5), a maximum thickness of the pressure compensation member 130 may have a value smaller than a maximum value of the thickness deviation (ΔT).

When the pressure compensation member 130 is respectively disposed on both outer surfaces of the low thickness region 124b based on the thickness direction of the electrode assembly 124, a maximum thickness of each pressure compensation member 130 may have a value approximately half of the thickness deviation (ΔT).

As an example, the thickness T2 of the low thickness region 124b may have a minimum value in the end position P1 of the electrode plate EP. However, a point at which the thickness of the electrode assembly 124 is minimum or a point at which a thickness deviation is maximum may be disposed at a point slightly away from the end position P1 of the electrode plate EP depending on a process of applying a slurry (or active material) to the electrode plate EP.

The thickness T of the pressure compensation member 130 may be defined as a value measured in an uncompressed state when the pressure compensation member 130 is an incompressible material, and may be defined as a value measured in a state in which the pressure compensation member 130 is compressed by a preset value (e.g., 60%, 80%, or the like) when the pressure compensation member 130 is formed of a compressible material.

When the pressure compensation member 130 is formed of an incompressible material (e.g., a rigid synthetic resin, or the like), the pressure compensation member 130 may have the same or similar thickness in a pressurized state and an unpressurized state. On the other hand, when the pressure compensation member 130 is formed of a compressible material (e.g., polyurethane foam, etc.), the pressure compensation member 130 may have a thickness thinner in the pressurized state than in the unpressurized state. Even in the case of the pressure compensation member 130 having the compressible material, if a compression ratio exceeds a preset value, it may be difficult to easily compress the pressure compensation member 130, or an additional compression amount may be small. In consideration thereof, the thickness T of the pressure compensation member 130 having the compressible material may be set to a value measured in a state in which the pressure compensation member 130 is compressed by a preset value (for example, 60%, 80%, or the like).

Since the pressure compensation member 130 comes into contact with the body portion 122 and the electrode assembly 124 of the battery cell 120, the pressure compensation member 130 may include an electrically insulating material so as to be insulated from the body portion 122 and the electrode assembly 124. When the insulation of the body portion 122 of the battery cell 120 is destroyed, the pressure compensation member 130 may act as an abnormal current path. In consideration thereof, the pressure compensation member 130 may have electrical insulation. The insulation performance of the pressure compensation member 130 may be set to be equal to or higher than the insulation performance of the pouch 121 or the insulation performance of the separator 124z. For example, the insulation performance of the pressure compensation member 130 may also be set to a value of 80 megaohm or higher. However, when another insulating material is disposed between the pressure compensation member 130 and the body portion 122 or between the pressure compensation member 130 and the electrode assembly 124, the electrical insulation of the pressure compensation member 130 may not be necessary or may have a lower level than that described above.

A material of the pressure compensation member 130 may be polyurethane, silicone, or rubber, but various changes are possible.

The pressure compensation member 130 may be attached to the low thickness region 124b or may be attached to an inner surface of the body portion 122 facing the low thickness region 124b. For example, the pressure compensation member 130 may be formed of a solid such as a film or tape and may be attached to the low thickness region 124b or the body portion 122. Alternatively, the pressure compensation member 130 may be configured to be applied in a liquid form to the low thickness region 124b of the electrode assembly 124 or an inner surface of the body portion 122 corresponding to the low thickness region 124b and then cured. For example, the pressure compensation member 130 may be formed of a curable liquid material such as a hot melt adhesive or a thermal adhesive.

In the case of the low thickness region 124b, a thickness of a portion adjacent to the electrode lead 126 in the first direction (Y-direction) in which the electrode lead 126 extends from the electrode assembly 124 may have a smaller value than a thickness of a portion distant from the electrode lead 126. Conversely, in the pressure compensation member 130, the thickness of the portion adjacent to the electrode lead 126 in the first direction (Y-direction) in which the electrode lead 126 extends from the electrode assembly 124 may have a greater value than the thickness of the portion distant from the electrode lead 126. As an example, the pressure compensation member 130 may have a shape in which a thickness thereof decreases as the pressure compensation member 130 moves away from the portion adjacent to the electrode lead 126. In the pressure compensation member 130, a surface facing the body portion 122 may be parallel to a plane of the body portion 122, and a surface facing the electrode assembly 124 may be inclined with the body portion 122. The pressure compensation member 130 may have a shape of a triangular prism as a whole. However, the shape of the pressure compensation member 130 may be changed in various ways in consideration of the thickness change of the low thickness region 124b. For example, when a point at which the thickness T2 of the low thickness region 124b is minimum is disposed at a point slightly away from the end position P1 of the electrode plate EP, the shape of the pressure compensation member 130 may have a shape corresponding to the thickness T2 change of the low thickness region 124b.

FIG. 5 is a graph illustrating a thickness deviation (ΔT) of the electrode assembly 124 (see FIG. 4) in the battery cell 120 according to an example embodiment, and FIG. 6 is a schematic diagram illustrating a thickness change of the electrode assembly 124 in a portion adjacent to the electrode lead 126 for a battery cell 120' according to a comparative example. FIG. 6 illustrates an internal state of the battery cell 120' according to the comparative example when the battery cell 120' according to the comparative example is pressed by a pressurizing pad CP, in a state in which the pressure compensation member 130 is not disposed. The (a) and (b) portions of FIG. 7 illustrate the electrode plate EP, and the (a) portion of FIG. 7 is a plan view of the electrode plate EP and the (b) portion of FIG. 7 is a cross-sectional view of the electrode plate EP. FIG. 8 is a cross-sectional view illustrating a cell assembly 110 according to an example embodiment.

Referring to FIG. 5 together with FIG. 3, in the electrode assembly 124 of the battery cell 120, a thickness thereof may vary depending on a position thereof. An upper drawing of FIG. 5 indicates 19 measurement positions P1 to P19 for measuring a thickness of the electrode assembly 124 in the first direction (Y-direction) in which the electrode lead 126 extends, and a lower graph indicates a thickness deviation (ΔT) measured in each of the measurement positions P1 to P19 in millimeters (mm). The measurement position P1 is an end position of the first electrode plate EP (e.g., the cathode plate 124x), the measurement position P19 is an end position of the second electrode plate EP (e.g., the anode plate 124y), and the measurement position P10 is an exact center XC of the electrode assembly 124. A graph of FIG. 5 illustrates the thickness deviation (ΔT) in each measurement position as compared to a thickness of the electrode assembly 124 of the measurement position P10, which is an exact center of the electrode assembly 124.

As illustrated in the graph of FIG. 5, the uniform thickness region 124a has a relatively uniform thickness, but it may be confirmed that the low thickness region 124b adjacent to the electrode lead 126 reduces the thickness of the electrode assembly 124. Since the battery cell 120 illustrated in FIG. 5 has the electrode leads 126 disposed on both sides of the body portion 122, the low thickness region 124b is formed on both sides of the electrode assembly 124.

As illustrated in FIG. 6, the thickness of the electrode assembly 124 decreases in the low thickness region 124b. That is, the thickness T2 of the low thickness region 124b may have a smaller value than the thickness T1 of the uniform thickness region 124a. As an example, the thickness T2 of the low thickness region 124b may decrease as the low thickness region 124b moves closer to a position adjacent to the electrode lead 126. The thickness T2 of the low thickness region 124b may have a minimum value in the end position P1 of the electrode plate EP.

Referring to the (a) and (b) portions of FIG. 7, the reason why the thickness of the electrode assembly 124 decreases in a portion adjacent to the electrode lead 126 is explained.

In the electrode plate EP included in the electrode assembly 124, a slurry AM is coated on a current collector CC formed of aluminum or copper. The slurry AM includes an active material, a conductive material, and a binder, and may be respectively coated on both sides of the current collector CC. The electrode plate EP may be divided into a coating area A1 on which the slurry AM including the active material is coated, and a non-coating area A2 on which the slurry AM is not coated. The non-coating area A2 has a constant second width L2 and may be cut into a constant shape to form an electrode tab 125. The coating area A1 may form a wide surface of the electrode plate EP. Each of the coating portion A1 and the non-coating area A2 may be cut based on a cutting line CL so as to have a height corresponding to one electrode plate EP.

The non-coating area A2 may include a first non-coating area A21 disposed on one side of the electrode plate EP and a second non-coating area A22 disposed on the other side of the electrode plate EP. The first non-coating area A21 may be provided as a cathode tab in the cathode plate 124x, and the second non-coating area A22 may be provided as an anode tab in the anode plate 124y.

Since the slurry AM is in a fluid state, the slurry AM flows down from edge portions A12 on both sides by its own weight, so that thicknesses of the edge portions A12 on both sides have a shape smaller than a thickness of a central portion A11. For example, the edge portions A12 on both sides may have an inclined shape. In this case, the edge portions A12 on both sides may have the smallest thickness in a boundary line BL with the non-coating portion A2. The edge portions A12 on both sides are formed over a first width L1. When the electrode plates EP are stacked to form the electrode assembly 124, the edge portions A12 on both sides may form a low thickness region 124b, and the first width L1 may correspond to a width L (see FIG. 3) of the low thickness region 124b.

Referring to FIG. 6 again, a gap T1 between the electrode assembly 124 and the body portion 122 in the end position P1 of the low thickness region 124b may be formed to be greater than a gap T2 between the body portions 122 in the electrode assembly 124 adjacent to the uniform thickness region 124a. Accordingly, a space S2 in which the electrode assembly 124 is not disposed may be formed between the body portion 122 and the low thickness region 124b. Due to the space S2, a surface pressure PS1 applied to the low thickness region 124b has a smaller value than a surface pressure PS2 applied to the uniform thickness region 124a. Accordingly, in the battery cell 120' according to the comparative example, the surface pressure of the low thickness region 124b may be uneven as compared to the uniform thickness region 124a. Since a portion in which the surface pressure or the pressing force is low has a farther distance between the electrode plates EP than other positions, the resistance between the electrode plates EP increases as the electrolyte decreases. When the resistance between the electrode plates EP increases, a lithium plating phenomenon may occur, which rapidly reduces the lifespan of the battery cell.

As illustrated in FIG. 8, a plurality of battery cells 120 may be stacked to form a battery assembly 110. The battery cell 120 according to an example embodiment may increase the surface pressure or the pressing force applied to the electrode assembly 124 in the low thickness region 124b by disposing the pressure compensation member 130 between the low thickness region 124b and the body portion 122. That is, when the pressure compensation member 130 is not disposed, the surface pressure PS1 applied to the low thickness region 124b is smaller than the surface pressure PS2 applied to the uniform thickness region 124a as illustrated in FIG. 6, but when the pressure compensation member 130 is disposed, the surface pressure PS1 applied to the low thickness region 124b may have a value similar to the surface pressure PS2 applied to the uniform thickness region 124a as illustrated in FIG. 8.

Additionally, the pressure compensation member 130 may reduce the size of the space (S2 in FIG. 6) generated in the low thickness region 124b to reduce the resistance between the electrode plates EP, and may alleviate or delay the lithium plating phenomenon that occurs in the electrode assembly 124 (e.g., the cathode plate 124x) in the low thickness region 124b. Accordingly, according to an embodiment of the present disclosure, the problem of rapidly reducing the lifespan of the battery cell 120 may be improved.

The (a) to (c) portions of FIG. 9 schematically illustrate an internal structure of the battery cell 120 according to another example embodiment, and (a) portion of FIG. 9 illustrates an installation position of the pressure compensation member 130 in front of the battery cell 120, (b) portion of FIG. 9 schematically illustrates a cross-section taken along line III-III' of (a) portion of FIG. 9, and (c) portion of FIG. 9 schematically illustrates a cross-section taken along line IV-IV' of (a) portion of FIG. 9.

The battery cell 120 illustrated in the (a) to (c) portions of FIG. 9 is different from the battery cell 120 illustrated in the (a) and (b) portions of FIG. 4 in that the pressure compensation member 130 includes a first pressurizing portion 131 and a second pressurizing portion 132.

As illustrated in the (a) to (c) portions of FIG. 9, the pressure compensation member 130 may include the first pressurizing portion 131 disposed between the low thickness region 124b and the inner surface of the body portion 122 in the first direction (Y-direction) in which the electrode lead 126 extends from the electrode assembly 124, and the second pressurizing portion 132 disposed along an edge of the electrode assembly 124 in which the electrode lead 126 is not disposed, in a plane, perpendicular to the thickness direction of the electrode assembly 124. The first pressurizing portion 131 may have the same configuration as that of the pressure compensation member 130 described in FIGS. 1 to 4B. The first pressurizing portion 131 may be disposed adjacently to an edge in which the electrode lead 126 is disposed, among the edges of the electrode assembly 124, and the second pressurizing portion 132 may be disposed adjacently to an edge in which the electrode lead 126 is not disposed. When the electrode leads 126 are respectively disposed on both sides of the body portion 122 in the first direction (Y-direction), two first pressurizing portions 131 may be disposed, and two second pressurizing portions 132 may be disposed.

When swelling occurs in the battery cell 120, the pressure and an expansion amount applied to a central portion of the body portion 122 may have the highest value, and the pressure and expansion amount applied to the edge thereof may have a relatively low value. For example, the pressure on the electrode assembly 124 acting due to the swelling may have a high value in the central portion of the electrode assembly 124 and may have a low value in the edge of the electrode assembly 124.

When the swelling occurs in the battery cell 120, the second pressurizing portion 132 may cover the edge of the electrode assembly 124 in which the electrode lead 126 is not disposed so as to increase the surface pressure in the edge of the battery cell 120. A height Ha of the second pressurizing portion 132 may have a smaller value than the width L of the first pressurizing portion 131. A thickness Ta of the second pressurizing portion 132 may be set according to the pressure applied to the edge of the electrode assembly 124 and the pressure applied to the central portion of the electrode assembly 124 when swelling occurs. As an example, the thickness Ta of the second pressurizing portion 132 may have a constant thickness as illustrated in the (c) portion of FIG. 9. Alternatively, the thickness Ta of the second pressurizing portion 132 may have a thickness increasing toward the outside.

The (a) and (b) portions of FIG. 10 schematically illustrate the internal structure of a battery cell 120 according to another example embodiment, and the (a) portion of FIG. 10 illustrates an installation position of the pressure compensation member 130 in front of the battery cell 120, and the (b) portion of FIG. 10 schematically illustrates a cross-section taken along line V-V' of the (a) portion of FIG. 10.

The battery cell 120 illustrated in the (a) and (b) portions of FIG. 10 differs in the shape of the pressure compensation member 130 as compared to the battery cell 120 illustrated in the (a) and (b) portions of FIG. 4.

As illustrated in the (a) and (b) portions of FIG. 10, the pressure compensation member 130 may have a stepped cross-sectional shape. In this case, in the pressure compensation member 130, a thickness of a portion adjacent to the electrode lead 126 in the first direction (Y-direction) in which the electrode lead 126 extends from the electrode assembly 124 may have a value greater than a thickness of a portion distant from the electrode lead 126.

The pressure compensation member 130 may include the first pressurizing portion 131 disposed between the low thickness region 124b and the inner surface of the body portion 122 in the thickness direction of the electrode assembly 124.

The first pressurizing portion 131 may have a stepped cross-sectional shape. For example, the first pressurizing portion 131 may include a first portion 131a disposed to face the low thickness region 124b and a second portion 131b disposed to face the body portion 122. The first portion 131a and the second portion 131b may be formed integrally, but the first portion 131a and the second portion 131b may also be manufactured separately and then attached to each other. A width La of the first portion 131a may have a smaller width than a width of the second portion 131b. A width L of the pressure compensation member 130 may be the same as the width of the second portion 131b. A thickness T of the first pressurizing portion 131 may be the sum of a thickness of the first portion 131a and a thickness of the second portion 131b. The number of steps forming the first pressurizing portion 131 is not limited to two and may be changed in various manners.

FIG. 11 is a schematic diagram illustrating an installation position of the pressure compensation member 130 in front of a battery cell 120 according to another example embodiment.

The battery cell 120 illustrated in FIG. 11 differs from the battery cell 120 illustrated in the (a) and (b) portions of FIG. 4 in that the pressure compensation member 130 includes a first pressurizing portion 131 and a second pressurizing portion 132.

As illustrated in FIG. 11, the pressure compensation member 130 may include the first pressurizing portion 131 disposed between the low thickness region 124b and the inner surface of the body portion 122 in the first direction (Y-direction) in which the electrode lead 126 extends from the electrode assembly 124, and the second pressurizing portion 132 disposed along the edge of the electrode assembly 124 in which the electrode lead 126 is not disposed, in a plane, perpendicular to the thickness direction of the electrode assembly 124. The first pressurizing portion 131 may be disposed adjacently to an edge in which the electrode lead 126 is disposed, among the edges of the electrode assembly 124, and the second pressurizing portion 132 may be disposed adjacently to an edge in which the electrode lead 126 is not disposed. The description of the first pressurizing portion 131 described in the (a) and (b) portions of FIG. 10 may also be applied to the first pressurizing portion 131 of FIG. 11. The description of the second pressurizing portion 132 described in the (a) and (b) portions of FIG. 9 may also be applied to the second pressurizing portion 132 of FIG. 114.

FIGS. 12A and 12B are schematic diagrams of a battery cell 120a according to another example embodiment. Each of the battery cell 120a illustrated in FIG. 12A and the battery cell 120a illustrated in FIG. 12B has a shape in which the electrode lead 126 is disposed on one side of the pouch 121 or the body portion 122. That is, the cathode lead 126a and the anode lead 126b may be respectively disposed on one side of the pouch 121. In this case, the low thickness region 124b may be formed adjacently to a portion in which the electrode lead 126 is disposed, and the uniform thickness region 124a may be formed in a position spaced apart from the electrode lead 126, that is, in a position deviating from the low thickness region 124b.

In an example embodiment including a battery cell 120a illustrated in FIG. 12A and a battery cell 120a illustrated in FIG. 12B, the electrode lead 126 may have a shape extending from one side of the electrode assembly 124, the low thickness region 124b may be disposed on one side of the electrode assembly 124, and the pressure compensation member 130 may be disposed in the low thickness region 124b disposed on one side of the electrode assembly 124.

FIG. 13 is a flow chart illustrating a manufacturing method (S100) of a battery cell 120 according to an example embodiment.

Referring to FIG. 13 together with FIGS. 1 to 4B, a manufacturing method (S100) of a battery cell according to an example embodiment may include a pressure compensation member disposing operation (S110) of disposing a pressure compensation member 130 in a body portion 122 of a pouch 121, an electrode assembly disposing operation (S120) of disposing an electrode assembly 124 connected to an electrode lead 126 in an accommodation space 122a formed in the body portion 122, and a sealing operation (S130) of sealing at least a portion of a circumference of the body portion 122. Additionally, a manufacturing method (S100) of a battery cell according to an example embodiment may include a folding operation (S140) of folding at least a portion of a sealing portion 123 of a battery cell 120. Here, the electrode assembly 124 may include a uniform thickness region 124a including a center of the electrode assembly 124 and a low thickness region 124b disposed closer to the electrode lead 126 than the uniform thickness region 124a, and the pressure compensation member 130 may be disposed in a portion of the body portion 122 facing the low thickness region 124b.

In the pressure compensation member disposing operation (S110), the pressure compensation member 130 may be disposed in the body portion 122 of the pouch 121. The pressure compensation member disposing operation (S110) may include a process of forming an accommodation space 122a in which the electrode assembly 124 is accommodated in the pouch 121.

The pressure compensation member 130 may be disposed in the pouch 121 before the accommodation space 122a is formed in the pouch 121, and the accommodation space 122a may be formed in the pouch 121 in a state in which the pressure compensation member 130 is disposed (see FIGS. 14A to 14D). Alternatively, the pressure compensation member 130 may be disposed in the body portion 122 in a state in which the accommodation space 122a is formed in the pouch 121 (see FIGS. 15A to 15C).

In the electrode assembly disposing operation (S120), the electrode assembly 124 may be disposed in the accommodation space 122a formed in the body portion 122 in a state in which the electrode lead 126 is connected.

In the sealing operation (S130), at least a portion of the circumference of the body portion 122 may be sealed to form a sealing portion 123. For example, when manufacturing a battery cell 120 using a single pouch 121, the sealing portion 123 may be formed on three edges (three surfaces) of the circumference of the body portion 122.

In the folding operation (S140), at least a portion of the sealing portion 123 of the battery cell 120 may be folded to form a folding portion 123c. The folding portion 123c may increase the bonding reliability of the sealing portion 123 and may reduce a region occupied by the sealing portion 123. For example, the folding portion 123c may be formed on the second sealing portion 123b in which the electrode lead 126 is not disposed.

FIGS. 14A to 14E are schematic diagrams sequentially illustrating a manufacturing method (S100) of a battery cell 120 according to an example embodiment.

FIGS. 14A to 14D illustrate a pressure compensation member disposing operation (S110). Referring to FIGS. 14A to 14D, the pressure compensation member disposing operation (S110) may include a process of disposing a pressure compensation member 130 in a pouch 121, and a process of forming an accommodation space 122a in the pouch 121 in a state in which the pressure compensation member 130 is arranged.

FIG. 14A illustrates a forming device 10 for forming an accommodation space 122a in a pouch film PF (outer sheet), which is a raw material of the pouch 121. The forming device 10 may include a die 11 having a groove 11a formed to correspond to the accommodation space 122a of the battery cell 120, a stripper 12 pressing the pouch film PF disposed on the die 11, and a pressurizing portion 13 pressing the pouch film PF by passing through a through-hole 12a formed in the stripper 12 to form the pouch film PF.

Lower shapes of the groove 11a of the die 11 and the pressurizing portion 13 may have shapes corresponding to the accommodation space 122a of the body portion 122. The through-hole 12a formed in the stripper 12 may have a size through which the pressurizing portion 13 may pass.

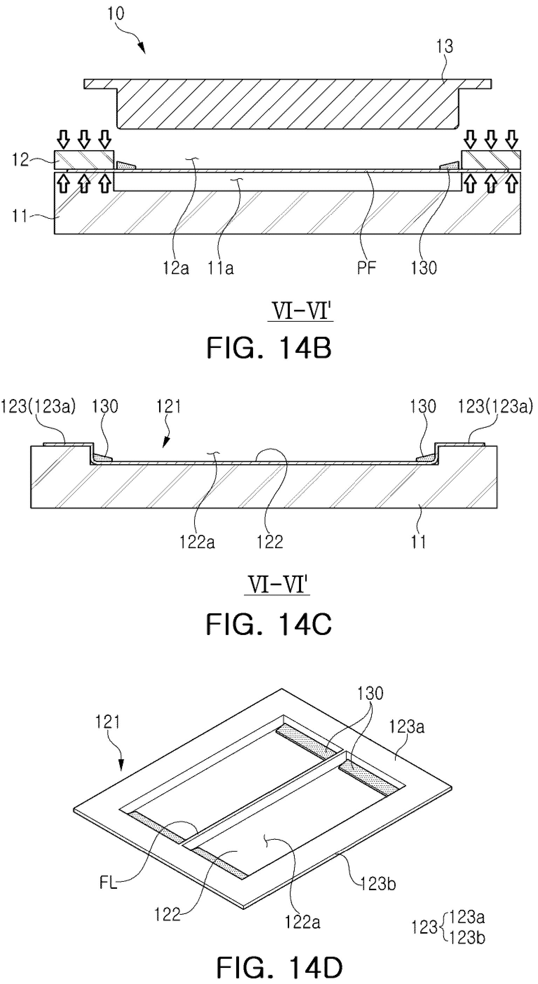

FIG. 14B illustrates a cross-section taken along line VI-VI' of FIG. 14A. Referring to FIG. 14B, after the pouch film PF is disposed on the die 11, an edge of a pouch film PF may be pressed by the stripper 12. The pressure compensation member 130 may be disposed in a portion corresponding to the accommodation space 122a of the body portion 122 in the pouch film PF. The pressure compensation member 130 may be disposed in a position corresponding to a portion facing the low thickness region 124b. The pressure compensation member 130 may be attached to the pouch film PF.

In a state in which the edge of the pouch film PF is supported between the die 11 and the stripper 12, the pouch film PF on which the pressure compensation member 130 is disposed may be pressurized by the pressurizing portion 13.

FIG. 14C is a cross-sectional view illustrating a state in which a pouch film PF having a pressure compensation member 130 disposed therein is pressurized by a pressurizing portion 13 to form an accommodation space 122a in a pouch 121, and FIG. 14D is a perspective view illustrating a pouch 121 and a pressure compensation member 130 formed through FIG. 14C.

The pressure compensation member 130 may be disposed in a portion of the body portion 122 facing the low thickness region 124b. For example, when the electrode leads 126 are disposed on both sides of the body portion 122, the pressure compensation member 130 may be disposed in the body portion 122 adjacent to a region in which the electrode lead 126 is disposed. As illustrated in FIG. 3, when the pressure compensation members 130 are respectively disposed on both outer sides of the low thickness region 124b based on the thickness direction of the electrode assembly 124, four pressure compensation members 130 may be disposed in the body portion 122.

FIG. 14E illustrates the electrode assembly disposing operation (S120). The electrode assembly 124 may be disposed in the accommodation space 122a formed in the body portion 122 in a state in which the electrode lead 126 is connected.

Then, subsequent processes such as the sealing operation (S130) of sealing the second sealing portion 123b and the folding operation (S140) of folding the second sealing portion 123b at least once may be performed.

FIGS. 15A to 15C are schematic diagrams sequentially illustrating a manufacturing method of a battery cell 120 according to another example embodiment.

FIGS. 15A to 15C illustrate a pressure compensation member disposing operation (S110). Referring to FIGS. 15A to 15C, the pressure compensation member disposing operation (S110) may include a process of forming an accommodation space 122a in a pouch 121 and a process of disposing a pressure compensation member 130 in the accommodation space 122a.

Comparing the pressure compensation member disposing operation (S110) of FIGS. 15A to 15C and the pressure compensation member disposing operation (S110) of FIGS. 14A to 14D, the pressure compensation member disposing operation (S110) of FIGS. 15A to 15C differs in that the accommodation space 122a is first formed and then the pressure compensation member 130 is disposed.

FIG. 15A is a cross-sectional view illustrating a state in which the edge of the pouch film PF is pressed by the stripper 12 after the pouch film PF is disposed on the die 11.

The pouch film PF may be pressurized by the pressurizing portion 13 in a state in which the edge of the pouch film PF is supported between the die 11 and the stripper 12.

FIG. 15B is a cross-sectional view illustrating a state in which the accommodation space 122a is formed in the pouch 121 by performing pressurization using the pressurizing portion 13.

FIG. 15C is a cross-sectional view illustrating a state in which the pressure compensation member 130 is disposed in the pouch 121 in which the accommodation space 122a is formed.

Then, subsequent processes such as the electrode assembly disposing operation (S120), the sealing operation (S130) of sealing the second sealing portion 123b, and the folding operation (S140) of folding the second sealing portion 123b at least once may be performed.

FIG. 16 is a perspective view of a battery module 100 according to an example embodiment, and FIG. 17 is an exploded perspective view of a battery module 100 illustrated in FIG. 16.

Referring to FIGS. 16 and 17, the battery module 100 according to an example embodiment may include a cell assembly 110 including a plurality of battery cells 120 and a busbar assembly 140 including a busbar 145 electrically connected to the plurality of battery cells 120. The battery module 100 according to an example embodiment may additionally include a module housing 150 accommodating the cell assembly 110.

In the scope of the claims of the present disclosure, the battery module 100 is defined as including a cell assembly 110 and a busbar assembly 140, and a shape and a structure thereof may be variously modified. For example, the battery module 100 according to the scope of the claims may include not only the battery module 100 exemplified in FIGS. 16 and 17, but also a battery pack 200, a battery pack having a cell-to-pack structure including a plurality of cells, and the like, exemplified in FIG. 18.

The cell assembly 110 may have a shape in which a plurality of battery cells 120 are stacked. In an example embodiment, the plurality of battery cells 120 may be stacked in a state in which wide surfaces thereof face each other. For example, the plurality of battery cells 120 may be stacked in the second direction (X-direction). However, if necessary, it may also be possible to have a shape in which the plurality of battery cells 120 are stacked in a gravity direction (i.e., the third direction) (Z-direction). The cell assembly 110 may include the battery cells 120 described with reference to FIGS. 1 to 12B.

As an example, each of the battery cells 120 may be configured as a pouch type battery cell 120 in which an electrode assembly 124 (see FIG. 3) is accommodated within the pouch 121 (outer material). Each of the battery cells 120 may include an electrode lead 126 exposed externally of the pouch 121. The electrode lead 126 may be electrically connected to the electrode assembly 124.

The busbar assembly 140 may include a busbar 145 having electrically conductive properties electrically connected to the electrode lead 126 of the battery cell 120 and a support plate 141 having electrically insulating properties. The support plate 141 may be disposed between the plurality of battery cells 120 and the busbar 145 having electrically conductive properties to support the busbar 145. The support plate 141 may electrically insulate between the bus bar 145 and the pouch 121 of the battery cell 120. For example, the bus bar 145 may be hooked and coupled to the support plate 141 or may be fixed to the support plate 141 in a fused state. However, a method of coupling the bus bar 145 to the support plate 141 may be changed in various manners.

The bus bar assembly 140 may be disposed to face the electrode lead 126 of the battery cell 120 and may be electrically connected to a plurality of electrode leads 126. For example, when the electrode leads 126 are disposed in both ends of the battery cell 120 in the first direction (Y-direction), the bus bar assembly 140 may be respectively disposed in both ends of the battery cell 120 in the first direction (Y-direction) and may be coupled to the electrode leads 126.

As an example, the electrode lead 126 may be connected to the bus bar 145 on the outside of the bus bar assembly 140 by penetrating through the support plate 141 of the bus bar assembly 140. To this end, the support plate 141 may include a through-portion through which the electrode lead 126 penetrates, and the bus bar 145 may include a coupling hole 146 through which the electrode lead 126 penetrates and is coupled.

The bus bar assembly 140 may include a connection terminal 147 for electrical connection between the bus bar 145 and the outside. The battery cell 120 may be electrically connected externally through the connection terminal 147. The connection terminal 147 may be exposed externally through a through-hole 156a formed in an end plate 156.

The module housing 150 may have a structure covering at least a portion of the cell assembly 110. The module housing 150 may form at least a portion of an exterior of the battery module 100.

The module housing 150 may have various shapes or split structures. As an example, the module housing 150 may be configured to include a housing body 151 having a cross-sectional shape in which one side is open, and a housing cover 155 combined with the housing body 151 to form an internal space. The housing cover 155 may cover a top surface of the cell assembly 110. The housing body 151 may include a lower plate 152 supporting a lower portion of the cell assembly 110, and a side plate 153 extending from both ends of the lower plate 152 in the third direction (Z-direction) and supporting a side surface of the cell assembly 110. Additionally, the module housing 150 may have a structure in which the end plates 156 are coupled to longitudinal front and rear surfaces of the module housing 150. The end plates 156 may be coupled to both side surfaces in which the electrode leads 126 of the battery cells 120 are disposed, i.e., both sides of the module housing 150 in the first direction (Y-direction).

The cell assembly 110 may be disposed inside the module housing 150. At least one surface of the module housing 150 may function as a heat dissipation plate releasing heat generated from the battery cells 120 externally. At least a portion of the module housing 150 may be composed of a material having high thermal conductivity, such as metal.

Meanwhile, although the module housing 150 in FIGS. 16 and 17 is illustrated as having a structure completely surrounding an outer surface of the cell assembly 110, the module housing 150 may also be configured such that at least one surface of the cell assembly 110 is exposed externally. For example, the module housing 150 may also have a configuration that does not cover a lower surface of the cell assembly 110.

FIG. 18 is an exploded perspective view of a battery pack 200 according to an example embodiment.

Referring to FIG. 18, the battery pack 200 according to an example embodiment may include a plurality of battery modules 100 and a pack housing 210 accommodating the plurality of battery modules 100. The description of the battery module 100 described in FIGS. 16 and 17 may be applied to the battery module 100 of FIG. 18.

The pack housing 210 may accommodate components installed in the battery pack 200, such as the battery module 100. The pack housing 210 may include a housing body 211 supporting the battery module 100 and a pack cover 215 covering the housing body 211. The housing body 211 may include a bottom member 212 and a side wall 213. The pack housing 210 may include a partition wall 214 crossing a space in which the battery module 100 is installed. For example, the accommodation space of the pack housing 210 may be divided into a plurality of spaces by the partition wall 214. The partition wall 214 may be installed by crossing the accommodation space to reinforce the rigidity of the pack housing 210.

The battery pack 200 may include a battery controller 220 for controlling the battery module 100. The battery controller 220 may be disposed within the pack housing 210. The battery controller 220 may include a battery management system (BMS). Since the configuration of the battery controller 220 is known in various forms, a detailed description thereof will be omitted. In an example embodiment, the battery controller 220 may be referred to as a processor.

The contents described above are merely examples of applying the principles of the present disclosure. Additionally, some components may be deleted and implemented in the above-described example embodiments, and each of the embodiments may be combined and implemented with each other.

The present disclosure also relates to the following aspects.

Aspect 1) a battery cell, comprising: an electrode assembly including a plurality of electrode plates and a plurality of separators; a pouch including a body portion accommodating the electrode assembly and a sealing portion sealing at least a portion of a circumference of the body portion; an electrode lead electrically connected to the electrode assembly; and a pressure compensation member disposed between the electrode assembly and the body portion, wherein the electrode assembly includes a uniform thickness region including a center of the electrode assembly, and a low thickness region disposed closer to the electrode lead than to the uniform thickness region, and the pressure compensation member is disposed between the low thickness region and an inner surface of the body portion in a thickness direction of the electrode assembly.

Aspect 2) In aspect 1, wherein the uniform thickness region and the low thickness region are formed in a region on which a slurry is coated.

Aspect 3) In aspect 1 or 2, wherein the electrode assembly includes an electrode tab connecting the plurality of electrode plates and the electrode leads, and the low thickness region is disposed between the electrode tab and the uniform thickness region.

Aspect 4) In any one of aspects 1 to 3, wherein when a difference between an average thickness of the electrode assembly in the uniform thickness region and a thickness of the electrode assembly in the low thickness region is referred to as a thickness deviation, a maximum thickness of the pressure compensation member has a value less than or equal to a maximum value of the thickness deviation.

Aspect 5) In aspect 4, wherein a thickness of the pressure compensation member is a value measured in an uncompressed state when the pressure compensation member is formed of an incompressible material, and the thickness of the pressure compensation member is a value measured in a state in which the pressure compensation member is compressed by a preset value when the pressure compensation member is formed of a compressible material.

Aspect 6) In any one of aspects 1 to 5, having one or more of the following characteristics (i) and (ii), respectively alone or in combination: (i) the pressure compensation member is formed of an electrically insulating material, and/or (ii) the pressure compensation member is respectively disposed on both outer surfaces of the low thickness region based on a thickness direction of the electrode assembly.

Aspect 7) In any one of aspects 1 to 6, wherein in the pressure compensation member, a thickness of a portion adjacent to the electrode lead in a first direction in which the electrode lead extends from the electrode assembly has a greater value than a thickness of a portion distant from the electrode lead.

Aspect 8) In any one of aspects 1 to 7, having one or more of the following characteristics (i) to (iii), respectively alone or in combination: (i) the pressure compensation member has a shape in which a thickness thereof decreases in a direction away from the portion adjacent to the electrode lead, (ii) the pressure compensation member has a stepped cross-sectional shape, and/or (iii) a height of the pressure compensation member has a value greater than or equal to the height of the electrode plate.

Aspect 9) In any one of aspects 1 to 8, wherein the pressure compensation member includes: a first pressurizing portion disposed between the low thickness region and an inner surface of the body portion in a first direction in which the electrode lead extends from the electrode assembly, and a second pressurizing portion disposed along an edge of the electrode assembly in which the electrode lead is not disposed, among edges of the electrode assembly, in a plane, perpendicular to a thickness direction of the electrode assembly.

Aspect 10) In any one of aspects 1 to 9, wherein the electrode leads have a shape in which the electrode leads respectively extend from both sides of the electrode assembly, the low thickness regions are respectively disposed on both sides of the electrode assembly, and the pressure compensation members are disposed in each of the low thickness regions.

Aspect 11) In any one of aspects 1 to 9, wherein the electrode lead has a shape extending from one side of the electrode assembly, the low thickness region is disposed on one side of the electrode assembly, and the pressure compensation member is disposed in the low thickness region disposed on one side of the electrode assembly.

Aspect 12) A manufacturing method of a battery cell, comprising: a pressure compensation member disposing operation of disposing a pressure compensation member in a body portion of a pouch; an electrode assembly disposing operation of disposing an electrode assembly to which an electrode lead is connected in an accommodation space formed in the body portion; and a sealing operation of sealing at least a portion of a circumference of the body portion, wherein the electrode assembly includes a uniform thickness region including a center of the electrode assembly, and a low thickness region disposed closer to the electrode lead than to the uniform thickness region, and the pressure compensation member is disposed in a portion of the body portion facing the low thickness region.

Aspect 13) In aspect 12, wherein the pressure compensation member disposing operation includes: a process of disposing the pressure compensation member in the pouch; and a process of forming the accommodation space in the pouch in a state in which the pressure compensation member is disposed.

Aspect 14) In aspect 12, wherein the pressure compensation member disposing operation includes: a process of forming the accommodation space in the pouch; and a process of disposing the pressure compensation member in the accommodation space.
Aspect 15) A battery module, comprising: a cell assembly including a plurality of battery cells; and a busbar assembly including a busbar electrically connected to the plurality of battery cells, wherein at least one of the plurality of battery cells includes: an electrode assembly including a plurality of electrode plates and a plurality of separators; a pouch including a body portion accommodating the electrode assembly and a sealing portion sealing at least a portion of a circumference of the body portion; an electrode lead electrically connected to the electrode assembly; and a pressure compensation member disposed between the electrode assembly and the body portion, wherein the electrode assembly includes a uniform thickness region including a center of the electrode assembly, and a low thickness region disposed closer to the electrode lead than to the uniform thickness region, and the pressure compensation member is disposed between the low thickness region and an inner surface of the body portion in a thickness direction of the electrode assembly.

## Claims

1. A battery cell, comprising:
an electrode assembly including a plurality of electrode plates and a plurality of separators;
a pouch including a body portion accommodating the electrode assembly and a sealing portion sealing at least a portion of a circumference of the body portion;
an electrode lead electrically connected to the electrode assembly; and
a pressure compensation member disposed between the electrode assembly and the body portion,
wherein the electrode assembly includes a uniform thickness region including a center of the electrode assembly, and a low thickness region disposed closer to the electrode lead than to the uniform thickness region, and
the pressure compensation member is disposed between the low thickness region and an inner surface of the body portion in a thickness direction of the electrode assembly.

2. The battery cell of claim 1, wherein the uniform thickness region and the low thickness region are formed in a region on which a slurry is coated.

3. The battery cell of claim 1 or 2, wherein the electrode assembly includes an electrode tab connecting the plurality of electrode plates and the electrode leads, and
the low thickness region is disposed between the electrode tab and the uniform thickness region.

4. The battery cell of any one of claims 1 to 3, wherein when a difference between an average thickness of the electrode assembly in the uniform thickness region and a thickness of the electrode assembly in the low thickness region is referred to as a thickness deviation,
a maximum thickness of the pressure compensation member has a value less than or equal to a maximum value of the thickness deviation.

5. The battery cell of claim 4, wherein a thickness of the pressure compensation member is a value measured in an uncompressed state when the pressure compensation member is formed of an incompressible material, and
the thickness of the pressure compensation member is a value measured in a state in which the pressure compensation member is compressed by a preset value when the pressure compensation member is formed of a compressible material.

6. The battery cell of any one of claims 1 to 5, having one or more of the following characteristics (i) and (ii), respectively alone or in combination:
(i) the pressure compensation member is formed of an electrically insulating material, and/or
(ii) the pressure compensation member is respectively disposed on both outer surfaces of the low thickness region based on a thickness direction of the electrode assembly.

7. The battery cell of any one of claims 1 to 6, wherein in the pressure compensation member, a thickness of a portion adjacent to the electrode lead in a first direction in which the electrode lead extends from the electrode assembly has a greater value than a thickness of a portion distant from the electrode lead.

8. The battery cell of any one of claims 1 to 7, having one or more of the following characteristics (i) to (iii), respectively alone or in combination:
(i) the pressure compensation member has a shape in which a thickness thereof decreases in a direction away from the portion adjacent to the electrode lead,
(ii) the pressure compensation member has a stepped cross-sectional shape, and/or
(iii) a height of the pressure compensation member has a value greater than or equal to the height of the electrode plate.

9. The battery cell of any one of claims 1 to 8, wherein the pressure compensation member includes:
a first pressurizing portion disposed between the low thickness region and an inner surface of the body portion in a first direction in which the electrode lead extends from the electrode assembly, and
a second pressurizing portion disposed along an edge of the electrode assembly in which the electrode lead is not disposed, among edges of the electrode assembly, in a plane, perpendicular to a thickness direction of the electrode assembly.

10. The battery cell of any one of claims 1 to 9, wherein the electrode leads have a shape in which the electrode leads respectively extend from both sides of the electrode assembly,
the low thickness regions are respectively disposed on both sides of the electrode assembly, and
the pressure compensation members are disposed in each of the low thickness regions.

11. The battery cell of any one of claims 1 to 9, wherein the electrode lead has a shape extending from one side of the electrode assembly,
the low thickness region is disposed on one side of the electrode assembly, and
the pressure compensation member is disposed in the low thickness region disposed on one side of the electrode assembly.

12. A manufacturing method of a battery cell, comprising:
a pressure compensation member disposing operation of disposing a pressure compensation member in a body portion of a pouch;
an electrode assembly disposing operation of disposing an electrode assembly to which an electrode lead is connected in an accommodation space formed in the body portion; and
a sealing operation of sealing at least a portion of a circumference of the body portion,
wherein the electrode assembly includes a uniform thickness region including a center of the electrode assembly, and a low thickness region disposed closer to the electrode lead than to the uniform thickness region, and
the pressure compensation member is disposed in a portion of the body portion facing the low thickness region.

13. The manufacturing method of a battery cell of claim 12, wherein the pressure compensation member disposing operation includes:
a process of disposing the pressure compensation member in the pouch; and
a process of forming the accommodation space in the pouch in a state in which the pressure compensation member is disposed.

14. The manufacturing method of a battery cell of claim 12, wherein the pressure compensation member disposing operation includes:
a process of forming the accommodation space in the pouch; and
a process of disposing the pressure compensation member in the accommodation space.

15. A battery module, comprising:
a cell assembly including a plurality of battery cells; and
a busbar assembly including a busbar electrically connected to the plurality of battery cells,
wherein at least one of the plurality of battery cells includes:
an electrode assembly including a plurality of electrode plates and a plurality of separators;
a pouch including a body portion accommodating the electrode assembly and a sealing portion sealing at least a portion of a circumference of the body portion;
an electrode lead electrically connected to the electrode assembly; and
a pressure compensation member disposed between the electrode assembly and the body portion,
wherein the electrode assembly includes a uniform thickness region including a center of the electrode assembly, and a low thickness region disposed closer to the electrode lead than to the uniform thickness region, and
the pressure compensation member is disposed between the low thickness region and an inner surface of the body portion in a thickness direction of the electrode assembly.
